Europäisches Patentamt

(19) European Patent Office

Office européen des brevets

(11) Numéro de publication: **0 227 548 B1**

(12) **FASCICULE DE BREVET EUROPEEN**

(45) Date de publication du fascicule du brevet:
11.04.90

(21) Numéro de dépôt: 86402844.4

(22) Date de dépôt: 17.12.86

(51) Int. Cl.⁴: **B62D 65/00, B61B 10/02**

(54) Balancelle pour le transport de charges, notamment des carrosseries de véhicules automobiles.

(30) Priorité: 19.12.85 FR 8518844

(43) Date de publication de la demande:
01.07.87 Bulletin 87/27

(45) Mention de la délivrance du brevet:
11.04.90 Bulletin 90/15

(84) Etats contractants désignés:
BE DE ES GB

(56) Documents cités:
DE-A- 2 600 348
US-A- 2 664 993
US-A- 4 341 161

(73) Titulaire: **COMPAGNIE FERALCO DES CONVOYEURS
S.A., 2, rue du Chariot d'Or, F-77400 Lagny sur
Marne(FR)**

(72) Inventeur: **Amiot, André, 4, rue Pierre Demay,
F-77174 Villeneuve St Denis(FR)**

(74) Mandataire: **Chameroy, Claude et al, c/o Cabinet
Malemont 42, avenue du Président Wilson,
F-75116 Paris(FR)**

EP 0 227 548 B1

## Description

La présente invention concerne une balancelle pour le transport de charges, notamment des carrosseries de véhicules automobiles, du type comprenant un châssis porteur relié à un convoyeur aérien et supportant des longerons inférieurs de réception des charges par l'intermédiaire de bras latéraux articulés.

De telles balancelles sont décrites par exemple dans le brevet français FR-A 2 525 571. Selon ce brevet, la balancelle a une structure en forme de double C avec seulement deux bras latéraux, ce qui permet une bonne accessibilité à la charge, en particulier lorsqu'il s'agit de véhicules de différents modèles circulant sur une même chaîne d'assemblage. Toutefois, il est apparu récemment que cette accessibilité n'était pas encore suffisante pour les postes automatiques d'assemblage, c'est-à-dire les robots.

La présente invention a donc pour but principal de remédier à cet inconvénient et, pour ce faire, elle a pour objet une balancelle qui se caractérise essentiellement en ce que les bras latéraux sont articulés sur un châssis portique qui est monté mobile en rotation sur le châssis porteur autour d'un axe parallèle au sens de déplacement du convoyeur, ce châssi portique étant essentiellement constitué de deux arceaux cintrés guidés en rotation par les galets de boîtes à galets disposées sur le châssis porteur et le rayon de cintrage desdits arceaux étant calculé de manière que le centre instantané de rotation soit situé le plus près possible du centre de gravité de l'ensemble mobile formé par le châssis portique et la charge transportée.

Grâce à cette disposition, on peut incliner la balancelle dans un sens ou dans l'autre suivant un certain angle, ce qui facilite l'accès sous véhicule pour les robots et présente pour les opérations manuelles un intérêt ergonomique évident.

Dans un mode de réalisation particulier de l'invention, le mouvement d'ouverture des bras latéraux est assuré par des rampes coopérant avec des galets portés par lesdits bras.

De plus, il est prévu un premier moyen de verrouillage pour bloquer les bras latéraux dans leur position normale d'utilisation sur le châssis portique, et un deuxième moyen de verrouillage pour bloquer le châssis portique en rotation sur le châssis porteur.

Ainsi, lorsque le premier moyen de verrouillage est dégagé et que le deuxième moyen de verrouillage est engagé, l'action des rampes assure simplement l'ouverture des bras latéraux, tandis que lorsque le premier moyen de verrouillage est engagé et que le deuxieme moyen de verrouillage est dégagé, l'action des rampes provoque la rotation du châssis portique et donc l'inclinaison de la charge transportée.

Par ailleurs, un troisième moyen de verrouillage est prévu pour bloquer les bras latéraux dans une position repliée sous le châssis portique, diminuant ainsi l'encombrement en hauteur de la balancelle lors du retour à vide.

Une forme d'exécution de l'invention est décrite ci-après à titre d'exemple, en référence aux dessins annexés dans lesquels :

- la figure 1 est une vue de côté d'une balancelle conforme à l'invention ;
- la figure 2 est une vue de face de cette balancelle ;
- la figure 3 est une vue en coupe suivant la ligne III-III de la figure 1 ;
- la figure 4 est une vue analogue à la figure 3 montrant la balancelle en position inclinée ;
- la figure 5 est une vue analogue à la figure 3 montrant les bras latéraux en position d'ouverture ;
- la figure 6 est une vue analogue à la figure 3 montrant les bras latéraux en position repliée ; et
- la figure 7 est une vue de détail du verrou assurant le blocage des bras latéraux en position repliée.

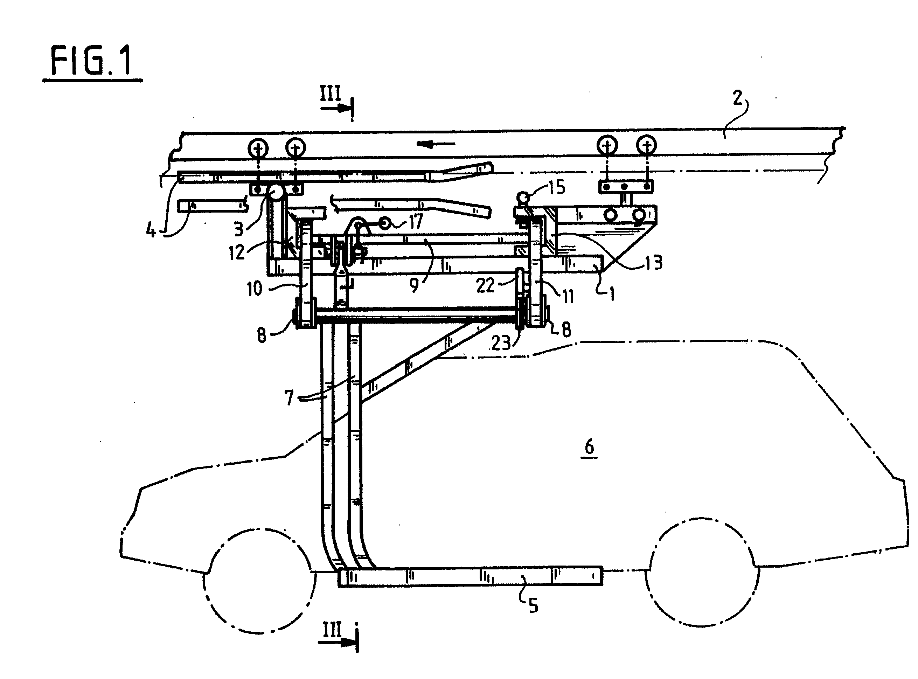

La balancelle représentée sur les figures 1 à 3 est du type de celle décrite dans le brevet français précité et comprend tout d'abord un châssis porteur 1 supporté et entraîné de façon connue en soi par un convoyeur aérien 2 du genre monorail. Sa stabilité latérale est assurée par un galet 3 coopérant avec des rails de guidage 4. Ce châssis porteur 1 supporte deux longerons inférieurs 5, destinés à supporteur la charge constituée ici par une carrosserie de véhicule automobile 6, par l'intermédiaire de deux bras latéraux articulés 7 disposés à l'avant, donnant ainsi à la balancelle une structure en forme de double C.

Conformément à l'invention, les bras latéraux 7 sont articulés en 8 sur un châssis portique 9 qui est monté mobile en rotation sur le châssis porteur 1 autour d'un axe parallèle au sens de déplacement du convoyeur 2. A cet effet, le châssis portique 9 est essentiellement constitué de deux arceaux cintrès 10 et 11 guidés en rotation par les galets de deux boîtes à galets 12 et 13 prévues sur le châssis porteur 1. De plus, le rayon de cintrage de ces arceaux est calculé de manière que le centre instantané de rotation 14 soit le plus près possible du centre de gravité de l'ensemble mobile formé par le châssis portique 9 et la charge transportée 6, ce qui permet de réduire au maximum les efforts appliqués sur la balancelle.

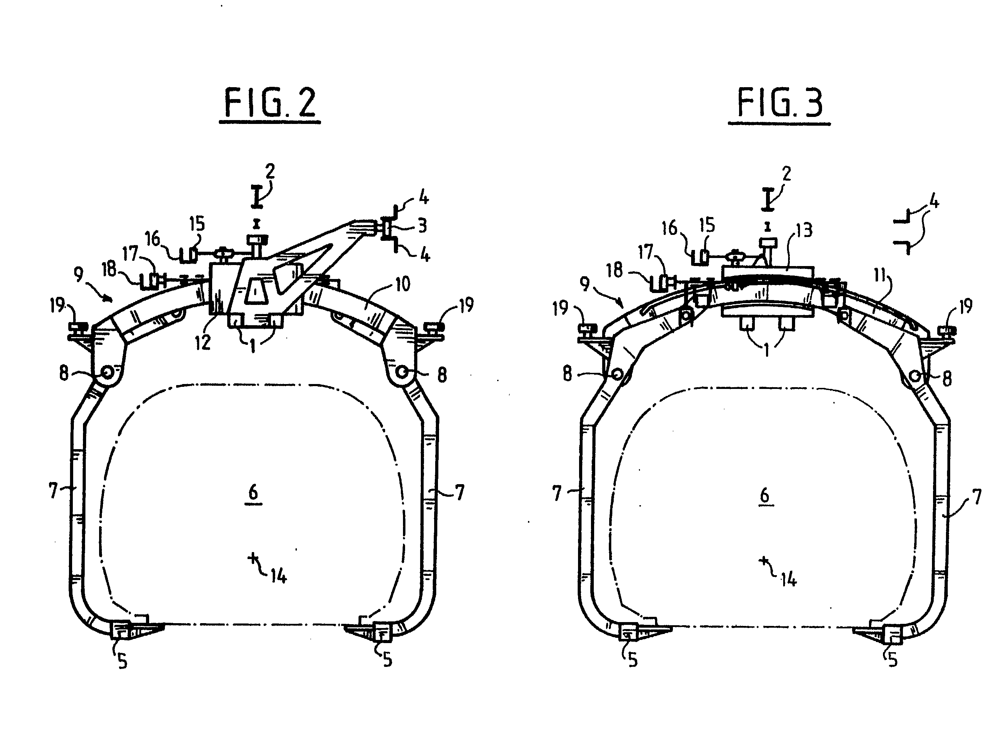

Le châssis portique 9 est bloqué en rotation dans sa position normale d'utilisation représentée sur la figure 3 par un verrou 15 commandé au moyen d'une rampe fixe telle que 16 ou de tout autre système extérieur. De même, les bras latéraux 7 sont bloqués dans leur position normale d'utilisation par un verrou 17 commandé au moyen d'une rampe fixe telle que 18 ou de tout autre système extérieur.

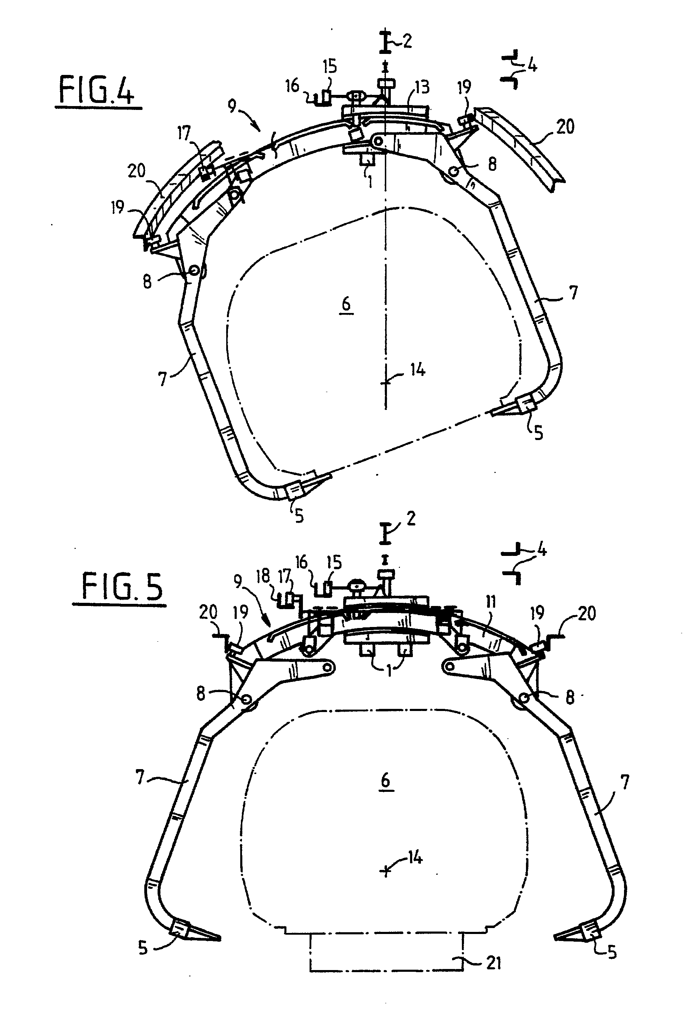

Chacun des bras latéraux 7 est par ailleurs pourvu d'un galet de commande 19, disposé au-delà de son point d'articulation 8 et qui est conçu pour coopérer avec des rampes fixes 20 visibles sur les figures 4 et 5.

Ainsi, lorsque le verrou 15 est dégagé et que les bras latéraux 7 sont maintenus bloqués par le verrou 17, l'action des rampes 20 provoque, pendant la marche de la balancelle, la rotation du châssis portique 9 par rapport au châssis porteur 1, comme illustré sur la figure 4. En fin de rotation, la balancelle peut être bloquée en position inclinée au moyen du même verrou 15. L'inclinaison correspondante de la charge 6, dans un sens ou dans l'autre, facilite l'accès sous véhicule pour les robots et présente également un intérêt ergonomique dans le cas d'interventions manuelles à effectuer sous le véhicule.

Au contraire, lorsque le verrou 17 est dégagé et que le châssis portique 9 est bloqué en rotation dans sa position normale d'utilisation par le verrou 15, l'action des rampes 20 provoque le mouvement d'ouverture des bras latéraux 7, comme illustré sur la figure 5, le mouvement de fermeture de ces mêmes bras s'effectuant par simple gravité. Il est ainsi possible d'assurer la prise automatique d'une charge préalablement posée sur un support tel que 21, ou au contraire le dépose automatique des charges en bout de chaîne.

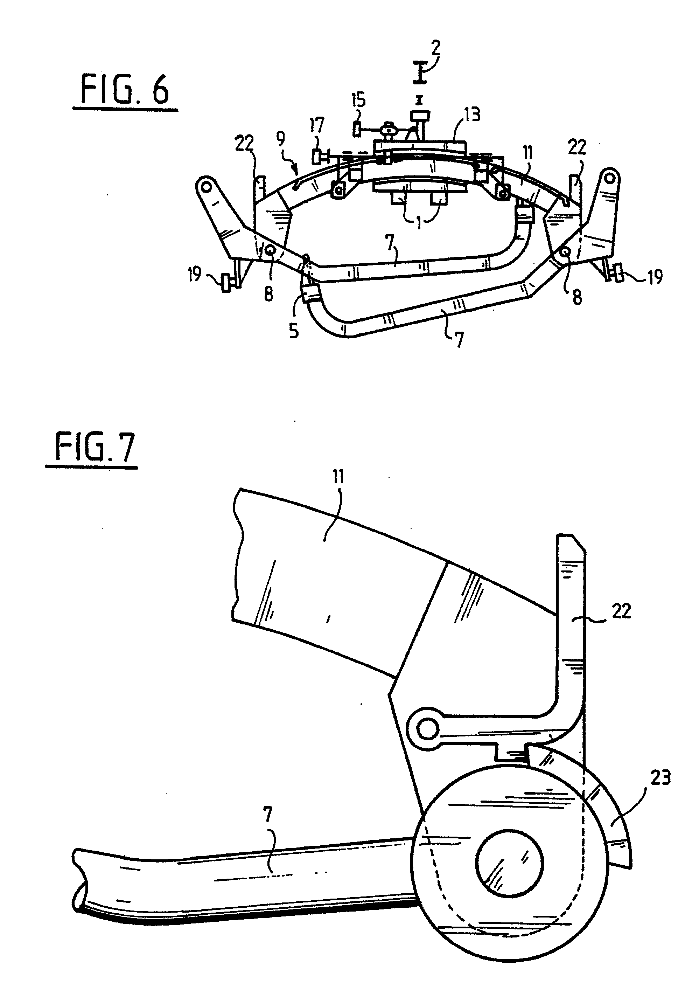

En se référant maintenant à la figure 6, on peut voir que les bras latéraux 7 peuvent en outre être repliés sous le châssis portique 9, afin de réduire l'encombrement en hauteur de la balancelle lors du retour à vide. Le mouvement correspondant des bras peut être assuré, soit par des rampes de forme appropriée agissant sur les galets de commande 19, soit par un système annexe indépendant.

Ainsi qu'on peut le voir plus clairement sur la figure 7, chacun des bras 7 est ensuite bloqué en position repliée au moyen d'un verrou tel que 22, commandé extérieurement et coopérant avec une came 23 solidaire en rotation dudit bras.

## Revendications

1. Balancelle pour le transport de charges, notamment des carrosseries de véhicules automobiles, du type comprenant un châssis porteur (1) relié à un convoyeur aérien (2) et supportant des longerons inférieurs (5) de réception des charges (6) par l'intermédiaire de bras latéraux articulés (7), caractérisée en ce que les bras latéraux (7) sont articulés (8) sur un châssis portique (9) qui est monté mobile en rotation sur le châssis porteur (1) autour d'un axe (14) parallèle au sens de déplacement du convoyeur (2), ce châssis portique (9) étant essentiellement constitué de deux arceaux cintrés (10, 11) guidés en rotation par les galets de boîtes à galets (12, 13) disposées sur le châssis porteur (1) et le rayon de cintrage desdits arceaux étant calculé de manière que le centre instantané de rotation (14) soit situé le plus près possible du centre de gravité de l'ensemble mobile formé par le châssis portique (9) et la charge transportée (6).

2. Balancelle selon la revendication 1, caractérisée en ce que le mouvement d'ouverture des bras latéraux (7) est assuré par des rampes (20) coopérant avec des galets (19) portés par lesdits bras.

3. Balancelle selon la revendication 2, caractérisée en ce qu'il est prévu un premier moyen de verrouillage (17) pour bloquer les bras latéraux (7) dans leur position normale d'utilisation sur le châssis portique (9), et un deuxième moyen de verrouillage (15) pour bloquer le châssis portique (9) en rotation sur le châssis porteur (1).

4. Balancelle selon la revendication 3, caractérisée en ce qu'un troisième moyen de verrouillage (22, 23) est prévu pour bloquer les bras latéraux (7) dans une position repliée sous le châssis portique (9).

## Claims

1. A trolley for conveying loads, in particular motor vehicle bodies, of the type comprising a support frame (1) connected to an overhead conveyor (2) and supporting bottom beams (5) for receiving loads (6) through articulated side arms (7), characterized in that the side arms (7) are pivoted (8) on a gantry frame (9) rotatably mounted on the support frame (1) about an axis (14) parallel to the direction of travel of the conveyor (2), said gantry frame (9) comprising essentially two bent hoops (10, 11) rotatably guided by the rollers of roller housing (12, 13) arranged on the support frame (1) and the bending radius of said hoops being so designed that the instantaneous centre of rotation (14) is located as close as possible to the centre of gravity of the mobile unit formed by the gantry frame (9) and the load conveyed (6).

2. The trolley according to claim 1, characterized in that the opening movement of the side arms (7) is provided by ramps (20) cooperating with rollers (19) carried by said arms.

3. The trolley according to claim 2, characterized in that first locking means (17) are provided for locking the side arms (7) in their normal service position on the gantry frame (9), and second locking means (15) are provided for rotatably locking the gantry frame (9) on the support frame (1).

4. The trolley according to claim 3, characterized in that third locking means (22, 23) are provided for locking the side arms (7) in a folded back position under the gantry frame (9).

## Patentansprüche

1. Gehänge zum Fördern von Lasten, insbesondere Kraftwagenkarosserien, des Typs, der einen Tragrahmen beinhaltet, der mit einem oberirdischen Förderer verbunden ist, und die unteren Längsträger (5) trägt, die durch seitlich schwenkbare Arme (7) Lasten (6) aufnehmen, dadurch gekennzeichnet, daß die seitlichen Arme (7) an einem Portalrahmen (9) angebracht sind (8), der um eine parallel zur Bewegungsrichtung des Förderers (2) angebrachte Achse auf dem Tragrahmen (1) montiert ist, wobei dieser Portalrahmen (9) im wesentlichen aus zwei gebogenen Bügeln (10, 11) besteht, die durch die Rollenkasten (12, 13) in Drehung geführt werden, die auf dem Tragrahmen (1) angebracht sind, und der Biegeradius der gesagten Bügel so ausgelegt ist, daß die momentane Drehmitte (14) so nahe wie möglich am Schwerpunkt der aus dem Portalrahmen (9) und der transportierten Last (6) bestehenden Einheit ist.

2. Gehänge entsprechend Anspruch 1, dadurch gekennzeichnet, daß die Öffnungsbewegung der seitlichen Arme (7) durch die Rampen (20) gewährleistet ist, die mit den Rollen (19) mitarbeiten, die durch diese Arme getragen werden.

3. Gestänge entsprechend Anspruch 2, dadurch gekennzeichnet, daß ein erstes Sperrmittel (17) vorgesehen ist, um die seitlichen Arme (7) auf den Portalrahmen (9) in ihrer normalen Gebrauchsstellung zu blockieren, und ein zweites Sperrmittel (15), um die Drehung des Portalrahmens (9) auf dem Tragrahmen (1) zu blockieren.

4. Gestänge entsprechend Anspruch 3, dadurch gekennzeichnet, daß ein drittes Sperrmittel (22, 23) vorgesehen ist, um die seitlichen Arme in einer zusammengezogenen Stellung unter dem Portalrahmen (9) zu blockieren.

FIG.1

EP 0 227 548 B1

# FIG.2

# FIG.3

EP 0 227 548 B1

FIG.4

FIG.5

## FIG. 6

## FIG. 7